(19) Europäisches Patentamt
European Patent Office
Office européen des brevets

(11) **EP 3 855 592 A1**

(12) **DEMANDE DE BREVET EUROPEEN**

(43) Date de publication:
**28.07.2021 Bulletin 2021/30**

(51) Int Cl.:
*H02J 3/16* *(2006.01)*          *H02J 3/48* *(2006.01)*
*H02J 3/50* *(2006.01)*          *H02J 3/12* *(2006.01)*

(21) Numéro de dépôt: **21150815.5**

(22) Date de dépôt: **10.01.2021**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **23.01.2020 FR 2000651**

(71) Demandeur: **Electricité de France
75008 Paris (FR)**

(72) Inventeurs:
- **MINOUX, Michel**
  **75013 Paris (FR)**
- **ZORGATI, Riadh**
  **92260 Fontenay-aux-roses (FR)**
- **CROTEAU, Dominique**
  **78500 Sartrouville (FR)**

(74) Mandataire: **Plasseraud IP
66, rue de la Chaussée d'Antin
75440 Paris Cedex 09 (FR)**

(54) **RÉGULATION DE LA TENSION DANS UNE BRANCHE BASSE TENSION D'UN RÉSEAU DE DISTRIBUTION**

(57)     Un procédé de régulation d'une tension dans une branche basse tension d'un réseau de distribution, le réseau de distribution comprenant une pluralité de générateurs d'énergie renouvelable, un nœud de référence, une pluralité de nœuds commandables et une pluralité de nœuds non-commandables, un transformateur avec régleurs en charge, le procédé comprenant :
- une définition d'un état en tension cible,
- une détermination d'un état effectif en tension,
- une détection d'un écart entre l'état en tension cible et l'état effectif en tension,
- une comparaison entre l'écart détecté et un écart prédéfini,
- si l'écart détecté entre l'état en tension cible et l'état effectif en tension est supérieur ou inférieur à un écart prédéfini, une mise en œuvre d'une méthode de régulation de la tension dans la branche basse tension du réseau de distribution choisie parmi trois méthodes de régulation.

[Fig. 1]

FIG. 1

EP 3 855 592 A1

**Description**

**Domaine technique**

La présente invention concerne un procédé de régulation de la tension dans une branche basse tension d'un réseau de distribution.

**Technique antérieure**

La gestion d'un réseau de distribution a pour objet de piloter de manière optimale son fonctionnement afin de minimiser les pertes, maîtriser les fluctuations de tension, et garantir ainsi une continuité de service dans des conditions économiques raisonnables. Or, la gestion du réseau électrique de distribution est amenée à évoluer profondément en raison de nombreux facteurs. Ces facteurs comprennent notamment le développement de nouveaux moyens décentralisés de production d'électricité dé-carbonée, fondée sur l'utilisation de sources d'énergies primaires renouvelables, l'évolution des usages de l'électricité, par exemple avec l'apparition des véhicules électriques, l'évolution des modes de consommation, par exemple en différant certaines consommations pour réduire la facture énergétique ou encore l'apparition de nouveaux acteurs sur le marché de l'énergie.

Les moyens de production décentralisée, ou « générateurs d'énergie dispersée GED », peuvent être gérés par des producteurs indépendants. Les moyens de production décentralisée se caractérisent par le fait qu'ils sont de puissance limitée et souvent raccordés au réseau de distribution. En se situant au plus près des points de consommation, ces moyens permettent de diminuer le coût de transport de l'énergie, les transits de puissance active au niveau du poste source et ainsi les pertes en ligne sur le réseau de transport. Toutefois, la connexion des moyens de production décentralisée sur le réseau de distribution pose de nouveaux problèmes d'exploitation, notamment la difficulté de tenir le plan de tension, c'est-à-dire les valeurs de tension dans les plages réglementaires.

Ainsi, dans le cadre de cette transition énergétique, le développement des énergies renouvelables va induire des difficultés comme la tenue de l'état en tension du réseau de distribution, notamment dans la branche basse tension.

Actuellement, le niveau de tension dans un réseau de distribution est fonction des quantités d'injection et de soutirage ayant lieu sur ce réseau. Autrement dit, le niveau de tension est fonction de la production et de la consommation en tension sur ce réseau. Une injection a pour effet d'augmenter la tension alors qu'un soutirage a pour effet de la faire baisser. Afin de respecter les normes sur la qualité de tension, la tension distribuée doit être maintenue entre deux niveaux de prescription, définis contractuellement. Chaque réseau haute-tension et basse tension dispose de ses propres plages. Le maintien de la tension dans les plages permises permet d'assurer la sécurité des personnes et des biens, d'assurer le bon fonctionnement des différents appareils connectés au réseau et de limiter les pertes par effet Joule dans le réseau.

Le réseau de distribution est un réseau arborescent dont les caractéristiques des lignes sont connues. Pour y réguler la tension, le gestionnaire de réseau actionne des dispositifs de contrôle-commande tels que le régleur en charge au poste HTB/HTA qui permettent d'ajuster le rapport de transformation haute tension/basse tension entre le réseau de transport et le réseau de distribution. Tant que les puissances injectées par les générateurs d'énergie dispersés sur ce réseau sont peu nombreuses et faibles, les perturbations induites sur la tension aux différents nœuds du réseau sont faibles, localisées, et peuvent être compensées par cette technique de régulation de la tension.

Dans un contexte de transition énergétique, le fort développement de nouveaux moyens décentralisés de production d'électricité d'origine renouvelable, utilisés par un très grand nombre d'acteurs va entrainer, sur le réseau basse tension, un grand nombre d'injections d'énergie renouvelable, induisant ainsi des fluctuations de la tension sur le réseau dépassant les seuils légaux, ne pouvant être traitées avec les techniques de régulation actuelles dans des conditions économiques satisfaisantes.

La technique actuelle de régulation de la tension sur le réseau de distribution se fait par une mesure locale de la tension, une consigne fixe de tension et un ajustement du rapport de transformation au niveau du poste-source HTB/HTA.

Le brevet français FR 1355392 vise à perfectionner cette technique par détermination de l'état en tension du réseau HTA, en utilisant les équations de Kirchhoff, en aval du poste-source et une consigne variable en lieu et place de la consigne fixe.

**Résumé**

La présente divulgation vise un procédé de régulation d'une tension dans une branche basse tension d'un réseau de distribution, le réseau de distribution comprenant une pluralité de générateurs d'énergie renouvelable, un nœud de référence, une pluralité de nœuds commandables et une pluralité de nœuds non-commandables, un transformateur avec régleurs en charge, le procédé comprenant :

- une définition d'un état en tension cible pour le réseau de distribution,
- une détermination d'un état effectif en tension du réseau de distribution,
- une détection d'un écart entre l'état en tension cible et l'état effectif en tension,
- une comparaison entre l'écart détecté et un écart prédéfini,
- si l'écart détecté entre l'état en tension cible et l'état effectif en tension est supérieur ou inférieur à l'écart prédéfini, une mise en œuvre d'une méthode de régulation de la tension dans la branche basse tension du réseau de distribution choisie parmi l'une ou l'autre de :

  * une première méthode par réglage d'un rapport du transformateur avec régleurs en charge et d'un ajustement des puissances actives et réactives aux nœuds commandables, ou
  * une deuxième méthode par ajustement des puissances actives et réactives aux nœuds commandables, ou
  * une troisième méthode par ajustement des puissances réactives aux nœuds commandables.

Le procédé propose une méthode originale de régulation de la tension en proposant la sélection d'une méthode de régulation la plus adaptée, en fonction des contraintes imposées par le réseau. Le procédé vise ainsi à supprimer les limitations de régulation imposées dans les procédés connus de l'état de l'art qui permettent de réguler la tension dans la branche basse tension en mettant en œuvre une unique méthode de régulation.

Selon un autre aspect, la méthode optimale de régulation de la tension dans le réseau de distribution basse tension est choisie en fonction d'un état en tension de la branche basse tension obtenu suite à une simulation de régulation de l'état en tension du réseau de distribution par chacune des trois méthodes de régulation sur le réseau de distribution basse tension.

Ainsi, les trois méthodes de régulation proposées sont testées afin de sélectionner la méthode la plus adaptée.

Selon un autre aspect, s'il résulte de la simulation par la première méthode que l'écart défini entre l'état en tension cible et l'état effectif en tension n'est pas respecté, déclenchement d'un signal indiquant qu'aucune régulation n'est possible, sinon, s'il résulte de la simulation par la deuxième méthode que l'écart défini entre l'état en tension cible et l'état effectif en tension n'est pas respecté, mise en œuvre de la première méthode sur le réseau de distribution basse tension,

sinon, s'il résulte de la simulation par la troisième méthode que l'écart défini entre l'état en tension cible et l'état effectif en tension n'est pas respecté, mise en œuvre de la deuxième méthode sur le réseau de distribution basse tension,

- sinon, mise en œuvre de la troisième méthode sur le réseau de distribution basse tension.

Il apparaît donc que chacune des méthodes de régulation permet de répondre à un état spécifique du réseau. La proposition de trois méthodes de régulation différentes permet donc d'optimiser les possibilités de régulation, rendant le procédé plus efficace.

Selon un autre aspect, lors de la mise en œuvre de l'une ou l'autre des trois méthodes optimales de régulation, des commandes optimales de régulation à appliquer au réseau basse tension sont déterminées par :

- une construction d'un programme linéaire comprenant

  * des variables de décision comprenant une tension au nœud de référence et des puissances actives et réactives aux nœuds commandables,
  * des contraintes liant entre elles lesdites variables de décision, lesdites contraintes définissant pour chaque nœud du réseau un écart en valeur absolue entre l'état effectif de la tension en un nœud et la tension-cible associée audit nœud,

- une résolution dudit programme linéaire pour obtenir une première valeur optimisée de la tension au nœud de référence et des valeurs optimales des puissances actives et réactives aux nœuds commandables, le point de linéarisation du système étant la tension cible au nœud de référence,
- ladite première valeur optimisée de la tension obtenue au nœud de référence et lesdites valeurs optimales des puissances actives et réactives aux nœuds commandables constituant une première approximation des commandes optimales à déterminer.

Ainsi, la résolution du programme linéaire permet d'obtenir les commandes optimales à appliquer pour chacune des méthodes de régulation. Par ailleurs, la résolution du programme linéaire est effectuée à chaque itération du procédé de régulation. Cela permet de prendre en compte effectivement l'état en tension du réseau à cet instant.

Selon un autre aspect, la détermination des commandes optimales de régulation à appliquer au réseau basse tension comprend en outre une amélioration de la précision de la première valeur optimisée de la tension au nœud de référence comprenant, mises en œuvre itérativement, :

- une application d'une fonction de recherche dichotomique pour déterminer une tension au nœud de référence par une approximation linéaire d'un premier couple de solutions fixées du système d'équations de Kirchhoff, des valeurs optimales des puissances actives et réactives aux nœuds commandables et en fonction de la première valeur optimisée de la tension au nœud de référence suite à la résolution du système linéaire,
- une résolution du système d'équations de Kirchhoff pour chacune des solutions fixées, afin d'obtenir un deuxième couple de valeurs de tensions encadrant une valeur optimale finale à déterminer de la tension au nœud de référence,
- une résolution du système d'équations de Kirchhoff pour ledit deuxième couple de valeurs de tensions pour obtenir un troisième couple de valeurs de tensions, et
- application à nouveau de la fonction de recherche dichotomique sur ledit troisième couple pour obtenir une valeur de tension optimale intermédiaire au nœud de référence.

Les commandes optimales sont ainsi déterminées de manière à être les plus précises possibles, permettant une régulation efficace de la tension.

Selon un autre aspect, le premier couple de solutions fixées est égale à plus ou moins 10% de la valeur de la tension cible au nœud de référence, et de préférence plus ou moins 5% de la valeur de la tension cible au nœud de référence.

Selon un autre aspect, le nombre de résolutions du système d'équations de Kirchhoff est compris entre 1 et 10, et de préférence entre 2 et 5, et de préférence égal 4.

Un nombre réduit de résolution du système d'équations est donc fait, limitant le temps et les ressources en calcul.

Selon un autre aspect, l'amélioration de la précision de la valeur optimale initiale de la tension au nœud de référence comprend en outre itérativement :

- la résolution dudit programme linéaire, avec comme point de linéarisation la valeur de tension optimale intermédiaire au nœud de référence jusqu'à ce qu'à convergence pour obtenir une valeur de tension optimale finale.

Selon un autre aspect, un nombre d'itérations est compris entre 1 et 15, et de préférence entre 1 et 5, et de préférence entre 2 et 4.

De même, le nombre d'itérations permettant d'obtenir une tension optimale est réduit, limitant le temps et les ressources en calcul.

Selon un autre aspect, la valeur de la tension optimale finale au nœud de référence est obtenue avec un degré de précision comprise entre $10^{-6}$ et $10^{-15}$, et de préférence égal à $10^{-10}$.

Il apparaît donc que la tension optimale est obtenue avec un degré de précision très important.

Selon un autre aspect, pour la première méthode, les commandes optimales sont la valeur de la tension optimale au nœud de référence et les valeurs optimales des puissances actives et réactives au nœud de référence,

- pour la deuxième méthode, les commandes optimales sont les valeurs optimales des puissances actives et réactives au nœud de référence,
- pour la troisième méthode, les commandes optimales sont les valeurs optimales des puissances réactives au nœud de référence.

Ainsi, chacune des méthodes de régulation comprend ses propres commandes optimales. Cela permet d'optimiser la régulation de la tension.

Selon un autre aspect, le procédé est mis en œuvre à chaque pas de temps prédéfini, de préférence à chaque pas de temps de 10 minutes.

Cela permet donc de connaître en temps réel l'état en tension du réseau, et de le réguler si besoin.

**Brève description des dessins**

D'autres caractéristiques, détails et avantages apparaîtront à la lecture de la description détaillée ci-après, et à l'analyse des dessins annexés, sur lesquels :

**Fig. 1**

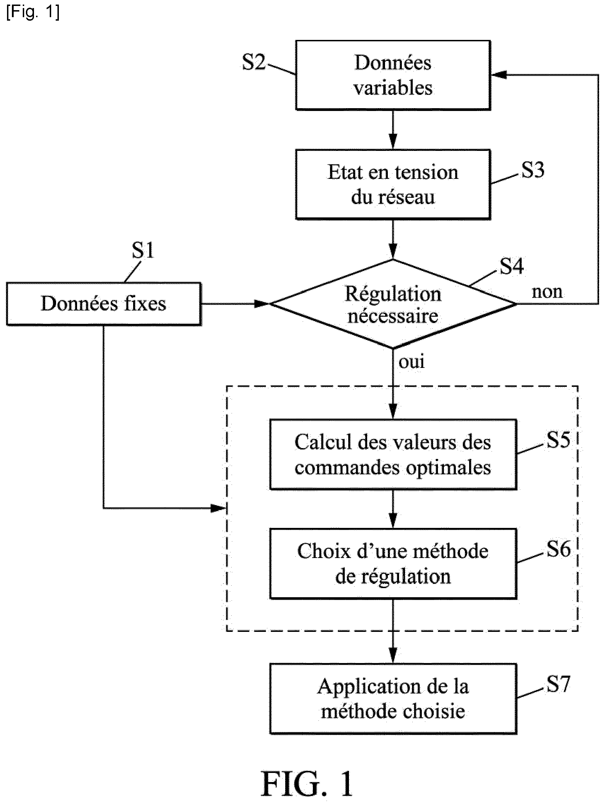

[Fig. 1] La Fig. 1 est un schéma synoptique des principales étapes d'un procédé de régulation selon un mode de réalisation.

**Fig. 2**

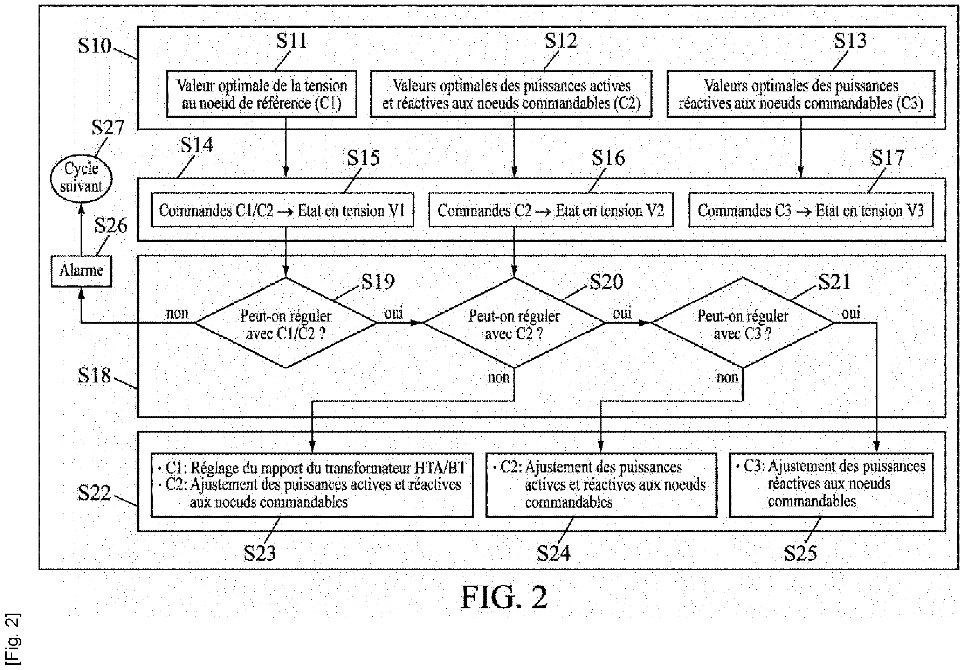

[Fig. 2] La Fig. 2 est un schéma synoptique des étapes permettant de choisir une méthode de régulation à appliquer sur le réseau de distribution, selon une mode de réalisation du procédé de régulation selon l'invention.

**Fig. 3**

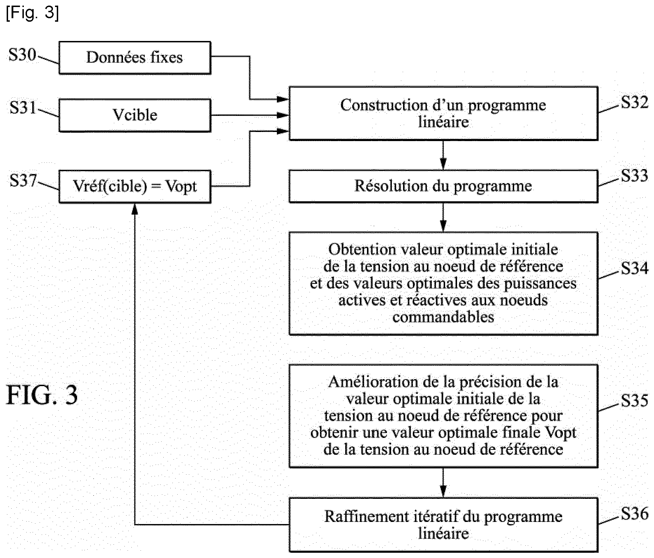

[Fig. 3] La Fig. 3 est un schéma synoptique des principales étapes permettant de déterminer les valeurs des commandes optimales à appliquer pour la régulation de la tension selon un mode de réalisation.

**Fig. 4**

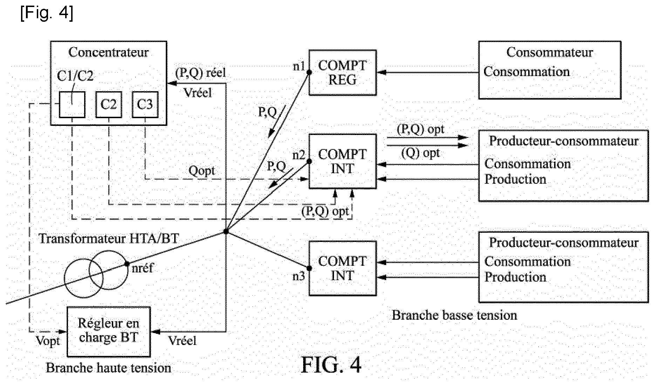

[Fig. 4] La Fig. 4 est un schéma illustrant la mise en œuvre du procédé de régulation sur une branche basse tension d'un réseau de distribution selon un mode de réalisation.

**Description des modes de réalisation**

La figure 1 illustre les principales étapes d'un procédé de régulation selon un mode de réalisation.

A l'étape S1, les données fixes relatives à la branche basse tension du réseau de distribution (ou « réseau de distribution » ou « réseau ») sont collectées. Le réseau de distribution est composé d'une pluralité de nœuds, chacun soumis à des injections et/ou à des soutirages fluctuant à chaque instant. Les données fixes sont avantageusement collectées une seule fois, au début de la mise en œuvre du procédé.

Les données fixes comprennent les valeurs cibles de la tension aux nœuds du réseau. Ces valeurs sont réelles et positives. Ce sont les valeurs idéales des modules des tensions aux nœuds, qu'il s'agit d'atteindre par la régulation. Ces valeurs sont sous la forme d'un vecteur Vcible, de dimension égale au nombre de nœuds. Cela correspond à l'état en tension cible.

Selon une réalisation, la tension cible est la même pour tous les nœuds, typiquement 230 Volts. Toutefois, des tensions différentes peuvent être contractées en différents nœuds.

Les tensions cibles ne peuvent pas toujours être atteintes exactement. Un pourcentage de déviation à respecter peut alors être établi. Ce pourcentage est par exemple de l'ordre de +10% et -10% autour de la valeur de la tension cible.

Dans la suite de la description, les termes « tension cible » ou « vecteur de tensions cibles » sont utilisés indifféremment pour faire référence au vecteur de tensions cibles correspondant à l'état en tension cible.

Les données fixes comprennent également une matrice d'admittance Y du réseau et le nœud de référence du réseau.

Les données fixes comprennent également des indices des nœuds dits « commandables ». Ces nœuds commandables sont les nœuds sur lesquels la régulation peut être effectuée depuis le concentrateur du réseau de distribution. Ces nœuds commandables peuvent être situés au niveau d'un compteur intelligent.

Au contraire, les nœuds non commandables sont des nœuds auxquels le procédé de régulation ne peut être appliqué. Ces nœuds non commandables peuvent être situés au niveau d'un compteur électrique classique ou intelligent.

Enfin, selon un mode de réalisation, les données fixes comprennent, pour chaque nœud commandable, un diagramme illustrant les plages de variations autorisées des puissances actives $P_i$ des puissances réactives $Q_i$ en ces nœuds.

En variante, le diagramme illustrant les plages de variations autorisées des puissances actives $P_i$ et des puissances réactives $Q_i$ aux nœuds commandables est variable dans le temps.

Ainsi, à l'étape S2 de collecte des données variables, ce diagramme peut être établi.

Les données variables peuvent en outre comprendre les puissances actives $P_i$ et réactives $Q_i$ injectées ou soutirées en chaque nœud du réseau. Ces valeurs peuvent être transmises au concentrateur au moyen d'un compteur intelligent, par exemple en courant porteur en ligne. En parallèle, une mesure de tension peut être faite au niveau de postes de distribution par le concentrateur.

En variante, un modèle d'estimation de charge ou profil de production peut être utilisé pour déterminer la puissance produite.

A l'étape S3, l'état effectif en tension du réseau est déterminé. Cela permet d'obtenir un vecteur de tensions dites « effectives », illustrant l'état en tension effectif de chaque nœud du réseau. Par « tension effective », on entend la tension effectivement déterminée à un instant i dans un nœud du réseau. Il s'agit donc d'un état réel de la tension en ce nœud et à cet instant i. Cet état réel en tension est noté ci-après « Vréel » et dans les références aux dessins.

Dans la suite de la description, les termes « tension effective » ou « vecteur de tensions effectives » sont utilisés indifféremment pour faire référence au vecteur de tensions effectives correspondant à l'état réel en tension, précité (Vréel).

Cet état en tension Vréel du réseau est déterminé par résolution du système d'équations de Kirchhoff selon différentes techniques connues dans l'état de la technique.

A l'étape S4, il est déterminé si une régulation doit être effectuée. Pour cela, il est déterminé si un écart prédéfini entre l'état en tension cible et l'état en tension effectif Vréel est respecté.

Typiquement, l'écart prédéfini peut être compris entre 5 et 10% autour de l'état en tension cible, et de préférence de 8%.

Si l'écart prédéfini est respecté, il n'y a pas de régulation et l'étape S2 est de nouveau mise en œuvre.

Si l'écart prédéfini n'est pas respecté, c'est-à-dire si une régulation est nécessaire, l'étape S5 est mise en œuvre.

A l'étape S5, les valeurs de commandes de régulations optimales de la tension sont calculées, tel que décrit en référence avec la figure 1.

Plus précisément, trois méthodes de régulation peuvent être mises en œuvre, chacune des méthodes présentant des commandes de régulation différentes.

Les commandes de régulation de la première méthode comprennent une valeur de la tension optimale au nœud de référence et les valeurs optimales des puissances actives et réactives aux nœuds commandables. La première méthode comprend également une procédure d'amélioration de la précision de la valeur de la tension au nœud de référence.

Les commandes de régulation de la deuxième méthode comprennent les valeurs optimales des puissances actives et réactives aux nœuds commandables.

Les commandes de régulation de la troisième méthode comprennent les valeurs optimales des puissances réactives aux nœuds commandables.

En fonction des commandes optimales calculées pour chacune des trois méthodes de régulation à l'étape S5, la méthode de régulation à appliquer est choisie à l'étape S6.

Dans certains cas, la première méthode de régulation n'est pas disponible. Le choix de la méthode de régulation à appliquer se fait donc uniquement entre les deuxième et troisième méthodes.

Enfin, la méthode choisie est appliquée à l'étape S7.

Avantageusement, les étapes S2 à S7 sont mises en œuvre à chaque pas de temps prédéfini, le pas de temps étant de préférence égal à 10 minutes.

La figure 2 illustre de manière plus précise les étapes S5 à S7 de la figure 1.

A l'étape S10, les valeurs optimales des commandes de régulation sont calculés. Plus précisément, une première commande C1 correspond à la valeur optimale de la tension au nœud de référence. La deuxième commande C2 correspond aux valeurs optimales des puissances actives et réactives aux nœuds commandables. La troisième commande C3 correspond aux valeurs optimales des puissances réactives aux nœuds commandables (S11 à S13).

A l'étape S14, une simulation de l'état en tension du réseau si l'une des méthodes de régulation était appliqué au réseau est effectuée.

Notamment, pour la première méthode, une simulation de l'application des commandes C1 et C2 est effectuée (étape S15) pour obtenir un premier état en tension V1. Pour la deuxième méthode, une simulation de l'application de la commande C2 est effectuée, pour obtenir un deuxième état en tension V2 (étape S16). Enfin, pour la troisième méthode, une simulation de l'application de la commande C3 est effectuée, pour obtenir un troisième état en tension V3 (étape S17).

A l'étape S18, une des trois méthodes est choisie.

Plus précisément, à l'étape S19, il est déterminé si l'état en tension V1 résultant de l'application de la première méthode sur le réseau basse tension satisferait l'écart prédéfini avec l'état en tension cible. Si ce n'est pas le cas, un signal indiquant qu'aucune régulation n'est possible est déclenché et le procédé de régulation est mis en œuvre à l'expiration du délai prédéfini (étapes S26 et S27).

Si l'écart est respecté, il est déterminé à l'étape S20 si l'état en tension V2 résultant de l'application de la deuxième méthode sur le réseau basse tension satisferait l'écart prédéfini avec l'état en tension cible. Si ce n'est pas le cas, la première méthode de régulation est appliquée au réseau de distribution à l'étape S23.

L'étape S23 comprend donc l'application des commandes C1 et C2 sur le réseau basse tension. Plus précisément, l'application de la première méthode comprend le réglage du rapport du transformateur HTA/BT ainsi que l'ajustement des puissances actives et réactives aux nœuds commandables.

Lorsqu'il est déterminé que l'état en tension V2 résultant de l'application de la deuxième méthode sur le réseau basse tension satisferait l'écart prédéfini avec l'état en tension cible, il est déterminé à l'étape S21 si l'état en tension V3 résultant de l'application de la troisième méthode sur le réseau basse tension satisferait l'écart prédéfini avec l'état en tension cible.

Si ce n'est pas le cas, la deuxième méthode de régulation est appliquée au réseau de distribution à l'étape S24. L'étape S24 comprend donc l'application des commandes C2 sur le réseau basse tension. Plus précisément, l'application de la deuxième méthode comprend l'ajustement des puissances actives et réactives aux nœuds commandables.

Lorsqu'il est déterminé que l'état en tension V3 résultant de l'application de la troisième méthode sur le réseau basse tension satisferait l'écart prédéfini avec l'état en tension cible, la troisième méthode est appliquée au réseau de distribution à l'étape S25. Plus précisément, l'application de la troisième méthode comprend l'ajustement des puissances réactives aux nœuds commandables.

Sur ce schéma, il est considéré que la première méthode de régulation est disponible. Si ce n'était pas le cas, les étapes S11, S15, S19, et S23 ne seraient pas mises en œuvre.

S'il était déterminé que la régulation résultant de l'application de la deuxième méthode (S20) ne satisferait pas l'écart prédéfini, le signal serait envoyé (étape S26).

La figure 3 illustre de manière plus précise les étapes permettant d'obtenir les commandes optimales à appliquer selon l'une des méthodes de régulation choisie.

Plus précisément, le calcul des commandes optimales de régulation de la tension comprend la résolution du problème d'optimisation P1 :

Minimiser z
sous les contraintes:

$$-z \leq |V(k)| - V \qquad (k) \leq z \quad \forall k \in N,$$

Avec V solution du système de Kirchhoff, fonction implicite de Vref et $(P\_i, Q\_i)$, $i \in I$

Et dans lequel Vref correspond à la valeur de la tension au nœud de référence.

Dans la formulation ci-dessus, N désigne l'ensemble des indices 1, 2, ..., n des nœuds du réseau. La solution optimale du problème (P1) dépend, implicitement, des valeurs des charges ou des productions correspondant aux différents éléments non contrôlables (lesquels sont des données externes du modèle d'optimisation, et sont connues). Cela correspond aux étapes S30 et S31 de la figure 3.

Le problème d'optimisation obtenu (P1) est non linéaire. Cependant, en introduisant une approximation linéaire de la dépendance de la tension V par rapport aux puissances actives P et réactives Q, le calcul des commandes optimales de régulation de la tension peut se formuler comme la solution d'un programme linéaire de forme :

$$\begin{cases} \min_x c^T x \\ s.c. \\ Ax \leq b \end{cases}$$

où x désigne le vecteur inconnu des commandes de régulation qu'il s'agit de déterminer, $c^T x$ est la fonction-objectif et $Ax \leq b$ représente l'ensemble des contraintes à respecter. La résolution d'un programme linéaire fait appel à des algorithmes connus et efficaces.

Cela correspond à l'étape S32.

Le programme linéaire obtenu s'écrit :

Minimiser z
sous les contraintes:

$$- z.a + \Sigma_{i \in IC} (MR(:,i) P(i) + MI(:,i) Q(i)) \leq h$$

$$- z.a - \Sigma_{i \in IC} (MR(:,i) P(i) + MI(:,i) Q(i)) \leq -h$$

$$- z + Vref \leq Vcible(ref)$$

$$- z - Vref \leq -Vcible(ref)$$

$$(P(i), Q(i)) \in F_i , \quad i=1,...n$$

Avec a le vecteur de dimension n-1 ayant toutes ses composantes égales à 1,
$M = YY^{-1} . (diag(VVcible*))^{-1}$, avec Y la matrice d'admittance, MR la partie réelle de M, MI la partie imaginaire de M, Vref la tension au nœud de référence et Vcible(ref) la tension cible au nœud de référence.

Ce programme linéaire est notamment obtenu suite à la linéarisation des équations de Kirchhoff.

Le programme linéaire ainsi formulé est résolu à l'étape S33. Ce programme linéaire peut être résolu par tout moyen informatique connu (solveur de programme linéaire). En sortie, les puissances actives P(i) et réactives Q(i) à injecter aux différents nœuds contrôlables du réseau sont obtenues.

Le point de linéarisation à partir duquel est construit le programme linéaire est initialement pris comme étant le vecteur des tensions-cible.

Une première valeur optimisée de la tension au nœud de référence est également obtenue en sortie du programme linéaire.

La première valeur optimisée de la tension au nœud de référence peut toutefois être améliorée à l'étape S35. Plus précisément, l'étape S35 vise à augmenter la précision de cette première valeur optimisée.

En effet, la première valeur optimisée est obtenue suite à une linéarisation du système d'équations de Kirchhoff. Ainsi, la valeur obtenue par rapport à l'état en tension effectif du réseau, c'est-à-dire qui résulterait de la résolution exacte du système d'équations de Kirchhoff pour le vecteur S des puissances injectées aux différents nœuds du réseau, où, pour chaque nœud contrôlable i, la partie réelle (S(i)) et la partie imaginaire (S(i)) sont les valeurs prises par les variables de décision correspondant au nœud i à l'optimum du programme linéaire.

Or, la précision des valeurs de tension au nœud de référence Vref et de l'écart à la tension cible au nœud de référence Vcible peut être sensiblement améliorée par la détermination de l'état en tension minimisant l'écart à la tension cible au nœud de référence Vcible à partir des valeurs optimales des puissances injectées aux nœuds contrôlables. Pour cela, un calcul supplémentaire est effectué immédiatement après la résolution du programme linéaire.

Dans un premier temps, une recherche dichotomique sur la tension au nœud de référence est effectuée en utilisant une approximation linéaire des variations de l'état en tension (la solution du système de Kirchhoff) en fonction de la tension au nœud de référence, et à partir de la connaissance de deux solutions données de Kirchhoff, Vsol1 et Vsol2. Ces solutions correspondent à des valeurs choisies, encadrant la valeur de la tension cible au nœud de référence Vcible(ref). Ainsi, par exemple, les deux solutions peuvent être comprises entre 0.9*Vcible(ref) et 1.1*Vcible(ref), Vsol1 étant inférieure à la valeur de la tension cible au nœud de référence, et Vsol2 étant supérieure à la valeur de la tension cible au nœud de référence. De préférence, les solutions Vsol1 et Vsol2 correspondent respectivement aux valeurs 0.95*Vcible(ref) et 1.05*Vcible(ref) de la tension cible au nœud de référence. Le résultat de cette première étape conduit à identifier un encadrement de la valeur optimale finale inconnue de la tension au nœud de référence entre deux valeurs notées Vref1bis et Vref2bis.

Puis, le système d'équations de Kirchhoff est résolu pour chacune des deux valeurs Vref1bis et Vref2bis. Cela permet de déterminer deux nouvelles solutions Vsol1' et Vsol2'. Avec ces deux nouvelles solutions, la première étape est de nouveau mise en œuvre.

Cela permet d'obtenir une précision élevée sur l'état en tension. Typiquement, la précision est de l'ordre de $10^{-10}$ au minimum. Par ailleurs, seules quatre résolutions du système d'équations de Kirchhoff sont nécessaires pour obtenir ce degré de précision. Cette étape est donc peu coûteuse en ressources et en temps de calcul, tout en permettant un très haut degré de précision.

A l'étape S36, la précision de la tension optimale au nœud de référence peut encore être améliorée. Pour cela, la valeur de la tension obtenue en sortie de l'étape S35 est utilisée comme point de linéarisation du programme linéaire. De fait, cette valeur est injectée dans l'étape de construction du programme linéaire (S37).

Ainsi, les étapes S30 à S37 peuvent être mises en œuvre de manière itérative, jusqu'à convergence de la solution. Le nombre d'itérations est compris entre 1 et 15, et de préférence entre 1 et 5, et de préférence entre 2 et 4. En sortie, une valeur optimale finale de la tension au nœud de référence est obtenue.

Cette valeur optimale finale correspond à la commande optimale C1, utilisée lorsque la première méthode de régulation est appliquée sur le réseau.

La figure 4 illustre la mise en œuvre du procédé décrit en référence aux figures 1 à 3 sur un exemple simplifié d'un réseau de distribution d'électricité.

Le réseau comprend par exemple un consommateur dont la consommation est transmise à un compteur classique COMPT REG. A partir de ce compteur, les puissances actives et réactives (P, Q) sont transmises au transformateur HTA/BT par courant porteur en ligne.

Le réseau comprend également un producteur-consommateur d'un premier type, dont la consommation et la production sont transmises à un compteur intelligent COMPT INT qui est situé en un nœud commandable. Les puissances actives et réactives (P, Q) de ce producteur-consommateur sont également transmises au transformateur HTA/BT par courant porteur en ligne.

Enfin, le réseau comprend également un producteur-consommateur d'un deuxième type, dont la consommation et la production sont transmises à un compteur intelligent COMPT INT qui est situé en un nœud non-commandable. Les puissances actives et réactives (P, Q) de ce producteur-consommateur sont également transmises au transformateur HTA/BT par courant porteur en ligne.

Les puissances actives et réactives (P, Q) sont également transmises au concentrateur. Enfin, le concentrateur et le régleur en charge BT reçoivent également l'état en tension effectif Vréel pour la branche basse tension.

Au niveau du concentrateur, il est déterminé si une régulation doit être appliquée à la branche basse tension. Si la réponse est positive, le concentrateur régule la branche basse tension du réseau selon l'une des trois méthodes de régulation décrites ci-avant.

Ainsi, le concentrateur détermine quelles commandes appliquer entre les commandes C1 et C2, simultanément, correspondant à la première méthode de régulation, la commande C2, correspondant à la deuxième méthode de régulation, ou la commande C3, correspondant à la troisième méthode de régulation.

Cela entraîne l'envoi d'une valeur optimale Vopt de tension au nœud de référence nref situé au niveau du transformateur ainsi que des valeurs optimales (P, Q)opt des puissances actives et réactives au niveau du nœud commandable lorsque la première méthode de régulation est appliquée. Lorsque la deuxième méthode de régulation est appliquée, seules les valeurs optimales des puissances actives et réactives (P, Q)opt sont envoyées au niveau du nœud commandable. Enfin, lorsque la troisième méthode de régulation est appliquée, seules les valeurs optimales des puissances réactives (Q)opt sont envoyées au niveau du nœud commandable.

## Revendications

1. Procédé de régulation d'une tension dans une branche basse tension d'un réseau de distribution, le réseau de distribution comprenant une pluralité de générateurs d'énergie renouvelable, un nœud de référence, une pluralité de nœuds commandables et une pluralité de nœuds non-commandables, un transformateur avec régleurs en charge, le procédé comprenant :

   - une définition d'un état en tension cible pour le réseau de distribution,
   - une détermination d'un état en tension effectif du réseau de distribution,
   - une détection d'un écart entre l'état en tension cible et l'état en tension effectif,
   - une comparaison entre l'écart détecté et un écart prédéfini,
   - si l'écart détecté entre l'état en tension cible et l'état en tension effectif est supérieur ou inférieur à l'écart prédéfini, une mise en œuvre d'une méthode de régulation de la tension dans la branche basse tension du réseau de distribution choisie parmi l'une ou l'autre de :

      * une première méthode par réglage d'un rapport du transformateur avec régleurs en charge et d'un ajustement des puissances actives et réactives aux nœuds commandables, ou
      * une deuxième méthode par ajustement des puissances actives et réactives aux nœuds commandables, ou
      * une troisième méthode par ajustement des puissances réactives aux nœuds commandables.

2. Procédé selon la revendication 1, dans lequel la méthode optimale de régulation de la tension dans le réseau de distribution basse tension est choisie en fonction d'un état en tension de la branche basse tension obtenu suite à une simulation de régulation de l'état en tension du réseau de distribution par chacune des trois méthodes de régulation sur le réseau de distribution basse tension.

3. Procédé selon la revendication 2, dans lequel :

   - s'il résulte de la simulation par la première méthode que l'écart défini entre l'état en tension cible et l'état en tension effectif n'est pas respecté, déclenchement d'un signal indiquant qu'aucune régulation n'est possible,
   - sinon, s'il résulte de la simulation par la deuxième méthode que l'écart défini entre l'état en tension cible et l'état en tension effectif n'est pas respecté, mise en œuvre de la première méthode sur le réseau de distribution basse tension,
   - sinon, s'il résulte de la simulation par la troisième méthode que l'écart défini entre l'état en tension cible et l'état en tension effectif n'est pas respecté, mise en œuvre de la deuxième méthode sur le réseau de distribution basse tension,
   - sinon, mise en œuvre de la troisième méthode sur le réseau de distribution basse tension.

4. Procédé selon l'une des revendications 1 à 3, dans lequel lors de la mise en œuvre de l'une ou l'autre des trois méthodes optimales de régulation, des commandes optimales de régulation à appliquer au réseau basse tension sont déterminées par :

   - une construction d'un programme linéaire comprenant

      * des variables de décision comprenant une tension au nœud de référence et des puissances actives et réactives aux nœuds commandables,
* des contraintes liant entre elles lesdites variables de décision, lesdites contraintes définissant pour chaque nœud du réseau un écart en valeur absolue entre l'état effectif de la tension en un nœud et la tension-cible associée audit nœud,

- une résolution dudit programme linéaire pour obtenir une première valeur optimisée de la tension au nœud de référence et des valeurs optimales des puissances actives et réactives aux nœuds commandables, le point de linéarisation du système étant la tension cible au nœud de référence,
- ladite première valeur optimisée de la tension obtenue au nœud de référence et lesdites valeurs optimales des puissances actives et réactives aux nœuds commandables constituant une première approximation des commandes optimales à déterminer.

5. Procédé selon la revendication 4, dans lequel la détermination des commandes optimales de régulation à appliquer au réseau basse tension comprend en outre une amélioration de la précision de la première valeur optimisée de la tension au nœud de référence comprenant, mises en œuvre itérativement, :

- une application d'une fonction de recherche dichotomique pour déterminer une tension au nœud de référence par une approximation linéaire d'un premier couple de solutions fixées du système d'équations de Kirchhoff, des valeurs optimales des puissances actives et réactives aux nœuds commandables et en fonction de la première valeur optimisée de la tension au nœud de référence suite à la résolution du système linéaire,
- une résolution du système d'équations de Kirchhoff pour chacune des solutions fixées, afin d'obtenir un deuxième couple de valeurs de tensions encadrant une valeur optimale finale à déterminer de la tension au nœud de référence,
- une résolution du système d'équations de Kirchhoff pour ledit deuxième couple de valeurs de tensions pour obtenir un troisième couple de valeurs de tensions, et
- application à nouveau de la fonction de recherche dichotomique sur ledit troisième couple pour obtenir une valeur de tension optimale intermédiaire au nœud de référence.

6. Procédé selon la revendication 5, dans lequel le premier couple de solutions fixées est égale à plus ou moins 10% de la valeur de la tension cible au nœud de référence, et de préférence plus ou moins 5% de la valeur de la tension cible au nœud de référence.

7. Procédé selon l'une des revendications 5 ou 6, dans lequel le nombre de résolutions du système d'équations de Kirchhoff est compris entre 1 et 10, et de préférence entre 2 et 5, et de préférence égal 4.

8. Procédé selon l'une des revendications 5 à 7, dans lequel l'amélioration de la précision de la valeur optimale initiale de la tension au nœud de référence comprend en outre itérativement :

- la résolution dudit programme linéaire, avec comme point de linéarisation la valeur de tension optimale intermédiaire au nœud de référence jusqu'à ce qu'à convergence pour obtenir une valeur de tension optimale finale.

9. Procédé selon la revendication 8, dans lequel un nombre d'itérations est compris entre 1 et 15, et de préférence entre 1 et 5, et de préférence entre 2 et 4.

10. Procédé selon l'une des revendications 8 ou 9, dans lequel la valeur de la tension optimale finale au nœud de référence est obtenue avec un degré de précision comprise entre $10^{-6}$ et $10^{-15}$, et de préférence égal à $10^{-10}$.

11. Procédé selon l'une des revendications 4 à 10, dans lequel :

- pour la première méthode, les commandes optimales sont la valeur de la tension optimale au nœud de référence et les valeurs optimales des puissances actives et réactives au nœud de référence,
- pour la deuxième méthode, les commandes optimales sont les valeurs optimales des puissances actives et réactives au nœud de référence,
- pour la troisième méthode, les commandes optimales sont les valeurs optimales des puissances réactives au nœud de référence.

12. Procédé selon l'une des revendications 1 à 11, **caractérisé en ce qu'**il est mis en œuvre à chaque pas de temps prédéfini, de préférence à chaque pas de temps de 10 minutes.

[Fig. 1]

S2 — Données variables

Etat en tension du réseau — S3

S1 — Données fixes

Régulation nécessaire — S4

non

oui

Calcul des valeurs des commandes optimales — S5

Choix d'une méthode de régulation — S6

Application de la méthode choisie — S7

FIG. 1

[Fig. 2]

FIG. 2

S10

S11 Valeur optimale de la tension au nœud de référence (C1)

S12 Valeurs optimales des puissances actives et réactives aux nœuds commandables (C2)

S13 Valeurs optimales des puissances réactives aux nœuds commandables (C3)

S14 Commandes C1/C2 → État en tension V1

S15

S16 Commandes C2 → État en tension V2

S17 Commandes C3 → État en tension V3

S18

S19 Peut-on réguler avec C1/C2 ?  non / oui

S20 Peut-on réguler avec C2 ?  non / oui

S21 Peut-on réguler avec C3 ?  non / oui

S22
· C1: Réglage du rapport du transformateur HTA/BT
· C2: Ajustement des puissances actives et réactives aux nœuds commandables
S23

S24
· C2: Ajustement des puissances actives et réactives aux nœuds commandables

S25
· C3: Ajustement des puissances réactives aux nœuds commandables

S26 Alarme

S27 Cycle suivant

[Fig. 3]

S30 — Données fixes

S31 — Vcible

Construction d'un programme linéaire — S32

S37 — Vréf(cible) = Vopt

Résolution du programme — S33

Obtention valeur optimale initiale de la tension au noeud de référence et des valeurs optimales des puissances actives et réactives aux noeuds commandables — S34

**FIG. 3**

Amélioration de la précision de la valeur optimale initiale de la tension au noeud de référence pour obtenir une valeur optimale finale Vopt de la tension au noeud de référence — S35

Raffinement itératif du programme linéaire — S36

[Fig. 4]

FIG. 4

Europäisches
Patentamt

European
Patent Office

Office européen
des brevets

**RAPPORT DE RECHERCHE EUROPEENNE**

Numéro de la demande

EP 21 15 0815

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 107 196 316 B (UNIV SHANGHAI ELECTRIC POWER) 27 décembre 2019 (2019-12-27) | 1-3,11, 12 | INV. H02J3/16 |
| Y | * figure 6 * | 4-10 | H02J3/48 |
|  | * alinéa [0013] * |  | H02J3/50 |
|  | * alinéa [0038] - alinéa [0041] * |  | H02J3/12 |
|  | * alinéa [0058] - alinéa [0062] * |  |  |
|  | ----- |  |  |
| Y | EP 3 598 598 A1 (ELECTRICITE DE FRANCE [FR]) 22 janvier 2020 (2020-01-22) | 4-10 |  |
|  | * alinéa [0009] - alinéa [0011] * |  |  |
|  | ----- |  |  |

**DOMAINES TECHNIQUES RECHERCHES (IPC)**

H02J

Le présent rapport a été établi pour toutes les revendications

| Lieu de la recherche | Date d'achèvement de la recherche | Examinateur |
|---|---|---|
| Munich | 29 janvier 2021 | Martin, Raynald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**EP 3 855 592 A1**

**ANNEXE AU RAPPORT DE RECHERCHE EUROPEENNE
RELATIF A LA DEMANDE DE BREVET EUROPEEN NO.**

EP 21 15 0815

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-2021

| Document brevet cité au rapport de recherche | Date de publication | Membre(s) de la famille de brevet(s) | Date de publication |
|---|---|---|---|
| CN 107196316 B | 27-12-2019 | AUCUN | |
| EP 3598598 A1 | 22-01-2020 | EP 3598598 A1<br>FR 3084168 A1 | 22-01-2020<br>24-01-2020 |

EPO FORM P0460

Pour tout renseignement concernant cette annexe : voir Journal Officiel de l'Office européen des brevets, No.12/82

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1355392